Europäisches Patentamt

European Patent Office

Office européen des brevets

(11) Veröffentlichungsnummer: **0 412 396 A2**

# EUROPÄISCHE PATENTANMELDUNG

(21) Anmeldenummer: 90114609.2

(51) Int. Cl.⁵: **G01N 29/24**

(22) Anmeldetag: 30.07.90

(30) Priorität: 10.08.89 DE 3926478

(43) Veröffentlichungstag der Anmeldung:
13.02.91 Patentblatt 91/07

(84) Benannte Vertragsstaaten:
**DE FR SE**

(71) Anmelder: **Siemens Aktiengesellschaft
Wittelsbacherplatz 2
D-8000 München 2(DE)**

(72) Erfinder: **Gugel, Georg
Fürtherstrasse 17
D-8501 Kalchreuth(DE)**

(54) Vorrichtung und Verfahren zum Prüfen eines Rohres.

(57) Um ein Rohr (3), insbesondere einen an einem Behälter (23) angeordneten Rohrstutzen, mittels Ultraschall zu prüfen, ist eine Vorrichtung (1) vorgesehen, bei der dem Rohr (3) eine Führungseinrichtung (15) mit einem verfahrbaren Kalter (7) zugeordnet ist. An dem Halter (7) sind zumindest zwei teleskopartig um das Rohr (3) ausfahrbare bogenförmige Sichelelemente (9, 11) geführt, wovon eines einen verfahrbaren Prüfwagen (15) mit zumindest einem senkrecht zur Sichelelementenebene verschiebbaren Prüfkopf (17) trägt.

FIG 1

## VORRICHTUNG UND VERFAHREN ZUM PRÜFEN EINES ROHRES

Die Erfindung bezieht sich auf eine Vorrichtung zum Prüfen eines Rohres insbesondere eines an einem Behälter angeordneten Rohrstutzens sowie ein Verfahren zum Prüfen eines Rohres.

Aus der DE-OS 33 37 635 ist ein Manipulator zur Prüfung von Rohrleitungsschweißnähten bekannt, bei dem ein auf einer Führungsschiene verfahrbarer Grundwagen eine Sichelauslegerführung aufweist, worin ein Sichelausleger mit zwei jeweils an den beiden Enden des Sichelauslegers senkrecht zur Sichelauslegerebene verfahrbaren Prüfköpfen angeordnet ist. Der Sichelausleger ist bogenförmig um die Rohrleitung führbar. Mit jedem der einzelnen Prüfsysteme kann etwa die Hälfte des Rohrleitungsumfanges abgefahren werden. Der Sichelausleger entspricht dabei einem Kreisbogen größer als $\pi$. Dieser Manipulator eignet sich nicht zur Prüfung von Rohrleitungen oder Stutzen, bei denen der Arbeitsraum eingeengt ist. Darüber hinaus kann mit einem Prüfkopf nicht der ganze Umfang abgefahren werden.

Der Erfindung liegt die Aufgabe zugrunde, die Prüfung eines Rohres oder Rohrstutzens auch mit eingeengtem Arbeitsbereich, insbesondere eines an einem Behälter angeordneten Rohrstutzens, mit einem Prüfkopf zu ermöglichen.

Diese Aufgabe wird erfindungsgemäß gelöst durch eine Vorrichtung zum Prüfen eines Rohres, insbesondere zur Ultraschallprüfung eines an einem Behälter angeordneten Rohrstutzens, bei der dem Rohr eine Führungseinrichtung mit einem darauf verfahrbaren Halter zugeordnet ist, an dem zumindest zwei teleskopartig um das Rohr ausfahrbare Sichelelemente geführt sind und an einem Sichelelement ein verfahrbarer Prüfwagen mit zumindest einem senkrecht zur Sichelelementenebene verschiebbaren Prüfkopf angeordnet ist.

Auf diese Weise wird eine große Beweglichkeit des Prüfkopfes erzielt, so daß auch besonders schwer zugängliche Stellen des Rohres erreicht werden.

Mit der erfindungsgemäßen Vorrichtung ist ferner ein einfaches Prüfen des gesamten Umfangs eines Rohres, insbesondere eines Rohrstutzens, auch in stark eingeengten Arbeitsbereichen mit einem Prüfkopf möglich.

Die Führungseinrichtung kann an einem an einer Führungsschiene verfahrbaren Wagen gehaltert sein. Auf diese Weise wird die Beweglichkeit der Vorrichtung weiter erhöht. Dabei ist der Wagen vorzugsweise in einer Ebene senkrecht zur Achse des Rohres verfahrbar. Die Vorrichtung kann somit in einfacher Weise unter Verkürzung der Umsetzzeit zu einem nächsten Rohr verfahren werden.

Es ist zweckmäßig, wenn der Halter an der Führungseinrichtung auch parallel zur Achse des Rohres verfahrbar ist. Dazu kann die Führungseinrichtung eine, zwei oder mehrere Führungsstangen umfassen. Es sind jedoch auch andere Ausgestaltungen, beispielsweise als Schiene, möglich.

Die Sichelelemente können jeweils eine Bogenlänge kleiner als $\pi$, insbesondere $2/3\,\pi$ bis $7/9\,\pi$, aufweisen. Damit ergibt sich eine günstige Ausbildung, da die Vorrichtung im eingefahrenen Zustand der Sichelausleger nur wenig Arbeitsraum beansprucht. Insbesondere wird dadurch eine Prüfung eines Kalottenbereichs an einem Rohrstutzen möglich.

Zum Prüfen eines Rohres, insbesondere zum Ultraschallprüfen eines an einem Behälter angeordneten Rohrstutzens, ist erfindungsgemäß eine Vorrichtung vorgesehen, bei der dem Rohr eine Führungseinrichtung mit einem darauf verfahrbaren Halter ange ordnet ist, an dem mindestens zwei teleskopartig um das Rohr ausfahrbare bogenförmige Sichelelemente geführt sind und an einem Sichelelement ein verfahrbarer Prüfwagen mit zumindest einem senkrecht zur Sichelelementenebene verschiebbaren Prüfkopf angeordnet ist, wobei der Prüfkopf auf einer mäanderförmigen Prüfbahn auf dem Rohr geführt wird.

Dadurch ist gegenüber der bekannten Ausführung auf einfache Weise sichergestellt, daß der zu prüfende Bereich eines Rohres oder Rohrstutzens von einem einzigen Prüfkopf überstrichen und zuverlässig geprüft wird.

Weitere vorteilhafte Ausgestaltungen der Erfindung sind in den Ansprüchen 7 und 8 angegeben.

Die Erfindung wird nachstehend anhand der in der Zeichnung dargestellten Ausführungsbeispiele näher erläutert. Es zeigen:

Fig 1 Eine Vorrichtung mit ausgefahrenen Sichelelementen in der Draufsicht;

Fig 2 eine Seitenansicht einer Weiterbildung der Vorrichtung in einer mittleren Position;

Fig 3 die Vorrichtung nach FIG 2 in einer unteren Position;

Fig 4 die Vorrichtung nach FIG 2 in einer oberen Position.

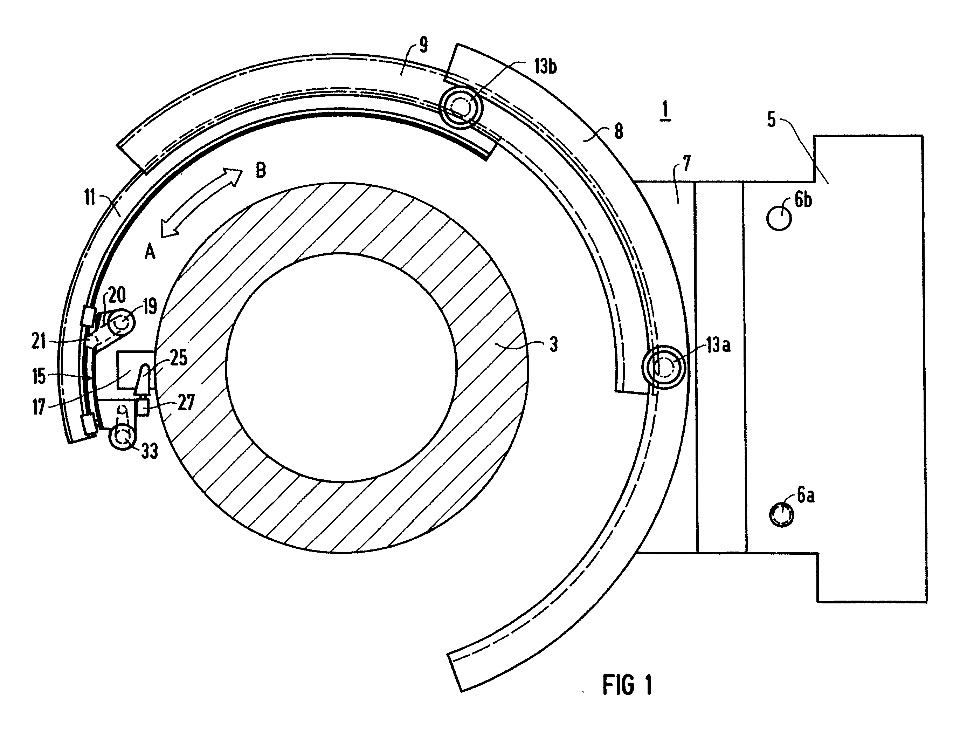

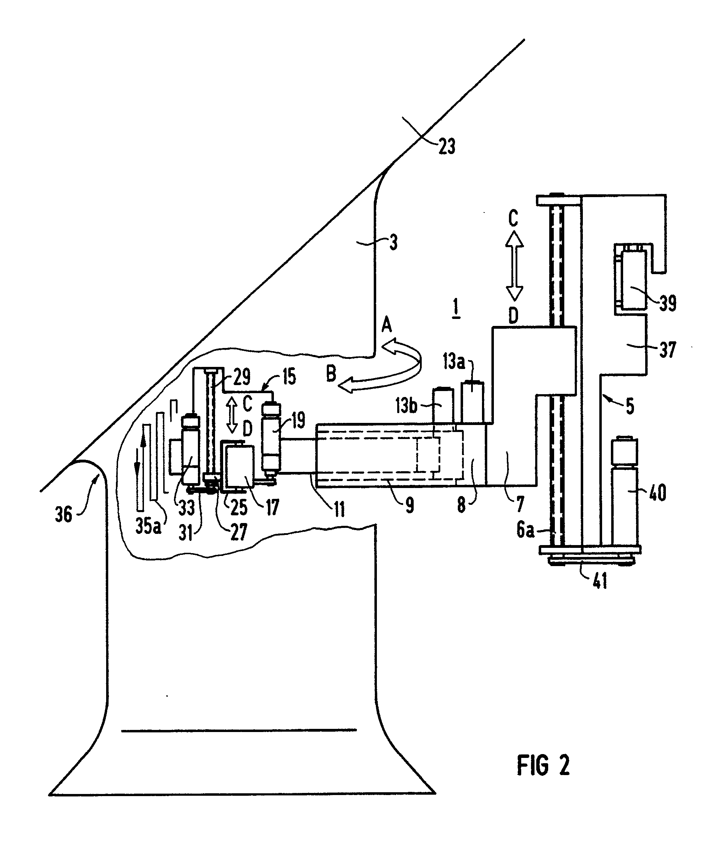

In Figur 1 ist eine Vorrichtung 1 zu sehen, die an einem Rohr 3 angeordnet ist. Am Rohr 3 ist eine Führungseinrichtung 5, mit zwei Führungsstangen 6a, 6b vorgesehen, an denen ein verfahrbarer Halter 7 befestigt ist. Der Halter 7 ist an der Führungseinrichtung 5 parallel zur Achse des Rohres 3 verfahrbar. Zumindest eine Führungsstange 6a ist dabei als Spindel ausgebildet, die durch eine nicht näher gezeigte, mit einem Gewinde versehenen Bohrung im Kalter 7 angeordnet ist. Ein Verfahren des Halters 7 auf der Führungseinrichtung 5 erfolgt durch Antreiben der Führungsstange 6a mittels eines Motors, der später in Figur 2 bis 4 in der Seitenansicht der Vorrichtung 1 gezeigt ist. Der Halter 7 weist auf seiner dem Rohr 3 zugewandten Seite ein Bogenteil 8 auf. An dem Bogenteil 8 ist ein erstes Sichelelement 9 verschiebbar angeordnet, an welchem ein zweites Sichelelement 11 verschiebbar angeordnet ist, so daß die Sichelelemente 9, 11 teleskopartig um das Rohr 3 ausfahrbar sind. Da die Sichelelemente 9, 11 symmetrisch aufgebaut sind, ist ein Ausfahren der Sichelelemente 9, 11 in beide Richtungen um das Rohr 3 möglich. Die Sichelelemente 9, 11 und das Bogenteil 7 weisen in diesem Ausführungsbeispiel eine Bogenlänge von etwa 7/9 $\pi$, entsprechend 140°, auf.

Zum Antreiben der Sichelelemente 9, 11 dienen jeweils am Bogenteil 8 und am ersten Sichelelement 9 angeordnete Motoren 13a, 13b, die mit nicht näher gezeigten Zahnrädern, gegebenenfalls über Getriebe, in zahnförmige Aussparungen der Sichelelemente 9,11 eingreifen. Der Motor 13b kann gegebenenfalls auch am Bogenteil 8 oder an dem Sichelelement 11 angeordnet sein.

Auf dem zweiten Sichelelement 11 ist ein mittels eines Antriebes verfahrbarer Prüfwagen 15 angeordnet, der zumindest einen senkrecht zur Sichelelementenebene verschiebbaren Prüfkopf 17 trägt. Als Antrieb für den Prüfwagen 15 dient ein Motor 19, der über einen Riemen 20 ein mit dem zweiten Sichelelement 11 in Eingriff stehendes Zahnrad 21 antreibt. Das zweite Sichelelement 11 ist zu diesem Zweck an seinem Innenbogen zahnförmig ausgestaltet. Der verfahrbare Prüfkopf 17 wird in Figur 2 näher beschrieben.

In der Draufsicht der Figur 1 ist zu sehen, daß der Prüfkopf 17 weit um das Rohr 3 herum verfahrbar ist. Da ein Verfahren des Prüfkopfes 17 in beide Richtungen A und B um das Rohr 3 herum möglich ist, kann eine Prüfbahn größer als 2 $\pi$ am Umfang des Rohres 3 abgefahren werden. Um eine möglichst günstige Auflage des Prüfkopfes 17 zu erzielen, ist dieser vorzugsweise kardanisch aufgehängt. Alle Motoren 13a, 13b und 19 sind über nicht näher dargestellte Daten- und Versorgungsleitungen mit einer zentralen Steuer- und Auswerteeinrichtung verbunden.

Figur 2 zeigt die Vorrichtung 1 in einer Seitenansicht. Das Rohr 3 ist in diesem Beispiel als Rohrstutzen ausgebildet, das an einem Behälter 23 angeordnet ist. Der Kalter 7 befindet sich in einer mittleren Position auf der Führungseinrichtung 5. Das erste Sichelelement 9 befindet sich in einer eingefahrenen Position. Das zweite Sichelelement 11 ist in Richtung A, für den Betrachter hinter das Rohr 3, ausgefahren, wobei der Wagen 15 auf das freie Ende des zweiten Sichelelementes 11 verfahren ist. Der Prüfkopf 17 ist über eine Gabel 25, die in einem Mitnehmer 27 gelagert ist, kardanisch aufgehängt, wobei der Prüfkopf 17 auch aus mehreren Wandlern zum Abstrahlen und Empfangen von Ultraschallwellen bestehen kann. Zum Verfahren des Prüfkopfes 17 ist der Mitnehmer 27 auf einer Spindel 29 angeordnet. Die Spindel 29 wird über einen Riemen 31 von einem Motor 33 angetrieben. Damit kann der Prüfkopf 17 senkrecht zur Sichelelementenebene auf der Oberfläche des Rohres 3 in die Richtungen C und D verfahren werden, ohne daß der Kalter 7 verfahren werden muß. Dies ist insbesondere wichtig bei eingeengten Arbeitsbereichen, bei denen der Kalter 7 nicht weiter verfahren werden kann. Eine spezielle Auswahl der Motoren 33, 19 erlaubt ein präzises Abfahren einer Prüfbahn möglich.

Wie aus der Figur 2 weiter zu ersehen ist, wird der Prüfkopf 17 vorzugsweise auf einer mäanderförmigen, nach Art einer Treppe ausgebildeten Prüfbahn 35a über die Oberfläche des Rohres 3 verfahren. Um den Prüfkopf 17 möglichst nah an den gebogenen Ansatzbereich 36 zwischen Rohr 3 und dem Behälter 23 zu verfahren ist die Gabel 25 unsymmetrisch ausgebildet.

Die Führungseinrichtung 5 ist in diesem Ausführungsbeispiel an einem verfahrbaren Wagen 37 gehaltert, der an einer Führungs schiene 39 in einer Ebene senkrecht zur Achse des Rohres 3 geführt ist. Das Verfahren des Wagens 37 kann manuell erfolgen. Für diesen Zweck ist jedoch auch der Einsatz allgemein bekannter Antriebsmittel möglich. Die Führungsschiene 39 kann beispielsweise um den Behälter 23 geführt sein, so daß die Vorrichtung 1 von einem Rohr zu einem nächsten Rohr verfahren werden kann.

In dieser Ansicht ist auch der für die als Spindel ausgebildete Führungsstange 6a als Antrieb dienende Motor 40 näher gezeigt. Die Kraftübertragung kann beispielsweise über ein Getriebe, oder wie dargestellt über einen Riemen 41 erfolgen.

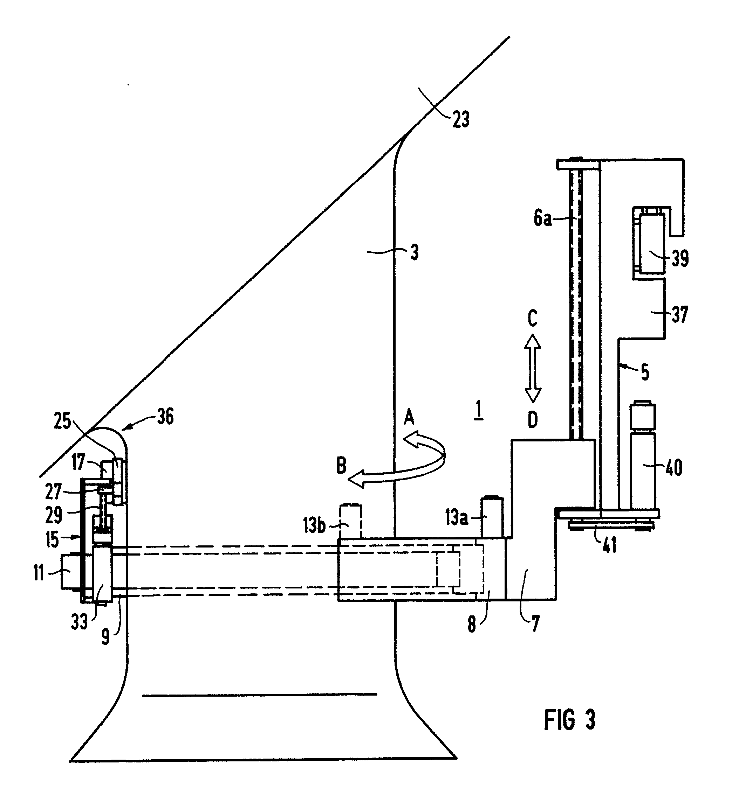

Figur 3 zeigt die Vorrichtung 1, bei der die Sichelelemente 9, 11 sich in einer unteren Position an der Führungseinrichtung 5 befinden. Die Sichelelemente 9, 11 sind in Richtung A ausgefahren, so daß sich der Prüfkopf 17 - wie in Figur 1 - auf der dem Kalter 7 abgewandten Seite des Rohres 3 befindet. Der Prüfkopf 17 ist dabei auf der Spindel 29 in eine obere Position in Richtung C verfahren, so daß der Ansatzbereich 36 des Rohres 3 am Behälter 23 geprüft werden kann.

In der gezeigten Position des Halters 7 an der Führungseinrichtung 5 kann das Rohr 3 an seinem vollen Umfang, das heißt um 360°, geprüft werden.

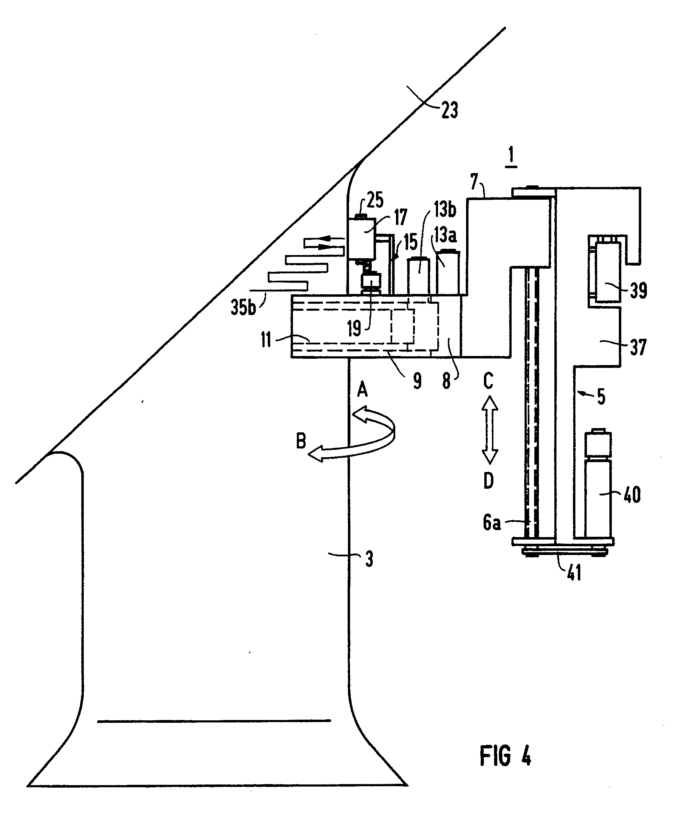

Dies ist beispielsweise in einer oberen Position, wie in Figur 4 dargestellt, nicht der Fall. Durch den schrägen Ansatz des Rohres 3 am Behälter 23 ist der Arbeitsraum für die Vorrichtung 1 eingeschränkt. Ein Sichelelement 9, 11 mit einer Bogen-

länge größer als $\pi$ könnte nicht nahe genug an den oberen Bereich des Rohres 3 herangeführt werden, da es mit seinen Enden an den Behälter 23 anstoßen würde. Dazu sind im vorliegenden Fall die Sichelelemente 9, 11 und das Bogenteil 8 mit Bogenlängen kleiner als $\pi$ ausgestattet. Auf diese Weise können die Sichelelemente 9, 11 möglichst weit an den oberen Bereich geführt werden, so daß der Prüfkopf 17 - durch die Spindel 29 und den Motor 33 angetrieben - auf seiner Prüfbahn 35b in Richtung C-D geführt werden kann. Besonders günstig ist es, wenn die Bogenlänge etwa 2/3 $\pi$ bis 7/9 $\pi$, entsprechend 120° bis 140°, betragen.

Um eine mäanderförmige Prüfbahn 35b, wie in Figur 4 gezeigt, zu bilden, wird abwechselnd nacheinander in zwei Bewegungsschritten

a) der Prüfwagen 15 in Umfangsrichtung A, B des Rohres 3 bewegt und

b) der Prüfkopf 17 parallel zur Achse des Rohres 3 verschoben, wobei der Prüfwagen 15 jeweils vor jedem neuen Bewegungsschritt seine Richtung um 180° umkehrt. Die treppenförmige Ausbildung der Prüfbahn 35b wird dadurch erzielt, daß die Bewegungsbahnen des Prüfwagens in Richtung B jeweils länger als in Richtung A sind.

Um eine Prüfbahn 35a, wie in Figur 2 gezeigt, zu bilden, wird sinngemäß verfahren, jedoch mit dem Unterschied, daß hier der Prüfkopf 17 statt des Prüfwagens 15 jeweils vor jedem neuen Bewegungsschritt seine Richtung umkehrt. Außerdem wird der Prüfkopf 17 in der einen Richtung C auf einer längeren Bewegungsbahn als in der anderen Richtung D verschoben. Bei Umkehr der Prüfrichtungen sind die Längen der Bewegungsbahn sinngemäß umzukehren. Diese Verfahrensweise eignet sich insbesondere um gebogene oder schräg verlaufende Schweißnähte an einem Rohr zu prüfen.

Die Vorrichtung 1 eignet sich zum Prüfen verschiedenster Rohre. Diese können beispielsweise auch gebogen sein, wobei die Führungsschiene 39 auch am Rohr 3 entlang geführt sein kann. Es ist somit eine Prüfung komplexer Rohrverläufe denkbar. Insbesondere ist die Vorrichtung 1 jedoch geeignet um Rohre, die als Rohrstutzen ausgebildet, sind zu prüfen. Dies sind beispielsweise Pumpenstutzen, Heizstabstutzen, Moderatorstutzen oder sonstige an Behälter angeschweißte Stutzen.

Alle Motoren sind in elektrischer Ausführung vorgesehen. Es können jedoch auch andere geeignete Antriebsarten vorgesehen werden, wobei für die Kraftübertragung durch die Riemen 20, 31, äquivalente, dem Fachmann bekannte Lösungen, insbesondere durch Zahnräder, möglich sind.

Die Steuerung und Datenauswertung für die Vorrichtung 1 ist mit nicht näher dargestellten allgemein bekannten Mitteln möglich. Dies kann insbesondere über eine digitale Recheneinheit geschehen. Die Aufbereitung der erfaßten Daten erfolgt dabei in einem Rechner, wobei die Visualisierung über ein Datensichtgerät oder auch über einen Drucker oder einen Plotter erfolgen kann.

## Ansprüche

1. Vorrichtung (1) zum Prüfen eines Rohres (3), insbesondere zur Ultraschallprüfung eines an einem Behälter (23) angeordneten Rohrstutzens, bei der dem Rohr (3) eine Führungseinrichtung (5) mit einem darauf verfahrbaren Kalter (7) zugeordnet ist, an dem mindestens zwei teleskopartig um das Rohr (3) ausfahrbare bogenförmige Sichelelemente (9, 11) geführt sind und an einem Sichelelement (11) ein verfahrbarer Prüfwagen (15) mit zumindest einem senkrecht zur Sichelelementenebene verschiebbaren Prüfkopf (17) angeordnet ist.

2. Vorrichtung nach Anspruch 1, bei der die Führungseinrichtung (5) an einem an einer Führungsschiene (39) verfahrbaren Wagen (37) gehaltert ist.

3. Vorrichtung nach Anspruch 2, bei der der Wagen (37) in einer Ebene senkrecht zur Achse des Rohres (3) verfahrbar ist.

4. Vorrichtung nach Anspruch 1, 2 oder 3, bei der der Halter (7) an der Führungseinrichtung (5) parallel zur Achse des Rohres (3) verfahrbar ist.

5. Vorrichtung nach einem der Ansprüche 1 bis 4, bei der die Sichelelemente (9, 11) jeweils eine Bogenlänge aufweisen, die kleiner als $\pi$, insbesondere 2/3 $\pi$ bis 7/9 $\pi$, ist.

6. Verfahren zum Prüfen eines Rohres (3), insbesondere zum Ultraschallprüfen eines an einem Behälter (23) angeordneten Rohrstutzens, mittels einer Vorrichtung (1), bei der dem Rohr (3) eine Führungseinrichtung (5) mit einem darauf verfahrbaren Kalter (7) zugeordnet ist, an dem mindestens zwei teleskopartig um das Rohr (3) ausfahrbare bogenförmige Sichelelemente (9, 11) geführt sind, und an einem Sichelelement (11) ein verfahrbarer Prüfwagen (15) mit zumindest einem senkrecht zur Sichelelementen ebene verschiebbaren Prüfkopf (17) angeordnet ist, wobei der Prüfkopf (17) auf einer mäanderförmigen Prüfbahn (35), auf dem Rohr (3) geführt wird.

7. Verfahren nach Anspruch 6 zum Prüfen eines schräg an einem Behälter (23) angeordneten Rohres (3) oder Rohrstutzens, bei dem zum Bilden einer mäanderförmigen Prüfbahn (35a) nach Art einer Treppe nacheinander in zwei Bewegungsschritten abwechselnd

a) der Prüfwagen (15) in Umfangsrichtung des Rohres (3) bewegt und

b) der Prüfkopf (17) parallel zur Achse des Rohres (3) verschoben wird, wobei der Prüfwagen (15) jeweils vor jedem neuen Bewegungsschritt seine Richtung umkehrt und der Prüfwagen (15) in der einen Richtung jeweils auf einer längeren Bewegungsbahn als in der anderen Richtung bewegt wird.

8. Verfahren nach Anspruch 6 zum Prüfen eines schräg an einem Behälter (23) angeordneten Rohres (3) oder Rohrstutzens, bei dem zum Bilden einer mäanderförmigen Prüfbahn (35a) nach Art einer Treppe nacheinander in zwei Bewegungsschritten abwechselnd

    a) der Prüfwagen (15) in Umfangsrichtung des Rohres (3) bewegt und

    b) der Prüfkopf (17) parallel zur Achse des Rohres (3) verschoben wird, wobei der Prüfkopf (17) jeweils vor jedem neuen Bewegungsschritt seine Richtung umkehrt und daß der Prüfkopf (17) in der einen Richtung jeweils auf einer längeren Bewegungsbahn als in der anderen Richtung verschoben wird.

FIG 1

FIG 2

FIG 3

FIG 4